# EUROPÄISCHE PATENTSCHRIFT

(11) **EP 4 278 875 B1**
(45) Veröffentlichungstag und Bekanntmachung des Hinweises auf die Patenterteilung: **02.07.2025**
(21) Anmeldenummer: 23173666.1
(22) Anmeldetag: 16.05.2023
(51) Int. Cl.: A01B 63/16

(54) **ANBAUGERÄT ZUR FELDBEARBEITUNG**
IMPLEMENT FOR FIELD CULTIVATION
OUTIL POUR LA CULTURE DES CHAMPS

(30) Priorität: 20.05.2022 DE 102022112700
(43) Veröffentlichungstag der Anmeldung: 22.11.2023
(73) Patentinhaber: Maschinenfabrik Bernard Krone GmbH & Co. KG, 48480 Spelle (DE)
(72) Erfinder: BOLSMANN, Martin, 49832 Andervenne (DE); BÜCHTER, STEVEN, 49509 Recke (DE)

(56) Entgegenhaltungen:
- DE-A1- 2 740 297
- DE-B4- 102008 044 486
- US-A- 3 913 683
- US-A- 5 628 371
- US-B2- 8 820 428

## Beschreibung

Die vorliegende Erfindung betrifft ein Anbaugerät zur Feldbearbeitung nach dem Oberbegriff von Anspruch 1.

In der Landwirtschaft werden zur Bearbeitung eines Feldes unterschiedliche Maschinen eingesetzt. Hierzu zählen zum Beispiel selbstfahrende Maschinen, die einen eigenen Fahrantrieb aufweisen sowie eine integrierte Vorrichtung zur Feldbearbeitung, oder gezogene Maschinen, die keinen eigenen Fahrantrieb aufweisen, sondern von einem Traktor oder Schlepper gezogen werden. Außerdem existieren Vorsatz- und Anbaugeräte, die für einen bestimmten Einsatz an eine Landmaschine wie einen Traktor, einen Mähdrescher, einen Feldhäcksler oder dergleichen angekoppelt werden, wobei die Landmaschine das Anbaugerät wenigstens teilweise, normalerweise vollständig, stützt und/oder trägt. Das heißt das Anbaugerät ruht in der Regel im Einsatz nicht oder nur teilweise auf einem eigenen Fahrwerk.

Manche Anbaugeräte können auch für die Straßenfahrt an der Landmaschine verbleiben, wobei in der Regel wenigstens Teile des Anbaugeräts in eine spezielle Position geschwenkt werden müssen, um eine zulässige Maximalbreite nicht zu überschreiten. Allerdings bedeutet das Anbaugerät eine erhebliche Zusatzbelastung der Landmaschine, was insbesondere für diejenige Achse gilt, die dem Anbaugerät am nächsten ist, also zum Beispiel die Vorderachse. Um zu verhindern, dass eine vorgeschriebene Maximalachslast (zum Beispiel 11,5 t) überschritten wird, ist es möglich, das Anbaugerät mit einem Zusatzfahrwerk zu unterstützen. Dieses nimmt einen Teil des Gewichts des Anbaugeräts auf und verringert die Achslast für die Landmaschine. Allerdings ist ein solches Zusatzfahrwerk beim Einsatz auf dem Feld hinderlich und muss entweder demontiert oder so verstellt werden, dass es keinen Bodenkontakt hat. Dies wiederum ist je nach Art des Anbaugeräts problematisch, da räumliche Einschränkungen hinsichtlich der Positionierung bestehen. Insbesondere können eine Positionierung und Verstellung problematisch sein, wenn das Zusatzfahrwerk auf Seiten der Landmaschine angeordnet ist, da u.U. ein nur geringer Abstand zur Landmaschine gegeben ist.

Die Druckschrift DE 27 40 297 A1 offenbart eine Arbeitseinheit aus Schlepper und Anbaugerät, wobei das Anbaugerät ein absenkbares Stützfahrwerk aufweist. Das Stützfahrwerk ermöglicht den Wechsel zwischen einer Arbeitsstellung und einer Transportstellung, in der das Stützfahrwerk einen Teil des Gerätegewichts aufnimmt.

Die Druckschrift US 56 28 371 A offenbart eine hydraulische Hebevorrichtung für ein landwirtschaftliches Anbaugerät um zwischen einer Transportposition und einer Arbeitsposition zu wechseln.

Aufgabe der Erfindung ist es, den Platzbedarf eines verstellbaren Zusatzfahrwerks eines Anbaugeräts für eine Landmaschine zu optimieren.

Die Aufgabe wird gelöst mit einem Anbaugerät mit den Merkmalen des unabhängigen Patentanspruchs 1. Vorteilhafte Ausführungsformen sind den abhängigen Ansprüchen entnehmbar.

Dafür wird ein Anbaugerät zur Feldbearbeitung geschaffen, mit einem Rahmen, der wenigstens indirekt an eine Landmaschine koppelbar ist, so dass diese das Anbaugerät wenigstens teilweise stützt, sowie wenigstens einem Fahrwerkmodul, aufweisend ein mit dem Rahmen verbundenes Anbindungselement sowie ein Aufhängungselement mit wenigstens einem um eine Radachse drehbaren Laufrad, wobei das Aufhängungselement gegenüber dem Anbindungselement verstellbar ist zwischen einer Transportposition, in der das wenigstens eine Laufrad wenigstens teilweise niedriger als der Rahmen angeordnet ist, um diesen zu stützen, und einer Arbeitsposition, in der es gegenüber der Transportposition wenigstens überwiegend vertikal aufwärts verlagert ist.

Der Begriff "Landmaschine" ist in diesem Zusammenhang nicht einschränkend auszulegen und bezeichnet jede Maschine, die in der Landwirtschaft eingesetzt werden kann, zum Beispiel einen Traktor oder Schlepper, eine Mähmaschine, einen Feldhäcksler etc. Das Anbaugerät ist zur Feldbearbeitung eingerichtet, also zum Beispiel zum Mähen, Häckseln, Ernten, Säen etc., wobei die begrifflich nicht zwischen "Feld" und "Acker" unterschieden wird. Beim Anbaugerät kann es sich zum Beispiel um ein Direktschneidwerk, eine Pick-up, einen Maisvorsatz, ein Getreideschneidwerk oder eine Traktoranbaumaschine wie Kreiselegge oder Sämaschine handeln. Das Anbaugerät kann an die Landmaschine gekoppelt werden und wird von dieser wenigstens anteilig gestützt oder getragen. Normalerweise ist das Anbaugerät in einem Arbeitsmodus, welcher der Feldbearbeitung entspricht, vollständig durch die Landmaschine gestützt und/oder getragen. In einem Transportmodus, welcher einem Transport zum Feld oder vom Feld entspricht, ist das Anbaugerät ebenfalls teilweise durch die Landmaschine gestützt. Die Kopplung an die Landmaschine ist zum einen statisch-mechanischer Art, zum anderen kann aber auch eine Kopplung zur Energie- und/oder Kraftübertragung in mechanischer, elektrischer, pneumatischer und/oder hydraulischer Form hergestellt werden. Das Anbaugerät kann insbesondere als Vorsatzgerät eingesetzt werden, also in Fahrtrichtung vorderseitig der Landmaschine, dies ist aber nicht zwangsläufig der Fall.

Das Anbaugerät weist einen Rahmen auf, der wenigstens indirekt an die Landmaschine koppelbar ist. Die entsprechende Kopplung ist sowohl im Arbeitsmodus als auch im Transportmodus gegeben. Der Rahmen ist normalerweise in sich starr ausgebildet und verleiht dem Anbaugerät mechanische Stabilität. Unterschiedliche bewegliche Teile können direkt oder indirekt an dem Rahmen gelagert sein, beispielsweise Messer eines Schneidwerks oder Häckslers, Zinken einer Pick-up oder dergleichen. Entsprechend der mechanischen Stabilität ist der Rahmen auch dasjenige Element, das direkt oder indirekt (über eine geeignete Kopplungsvorrichtung, die ggf. auch als Teil des Rahmens angesehen werden kann) an der Landmaschine angekoppelt wird. Diejenige Seite des Rahmens, die an die Landmaschine angekoppelt wird, so dass sie in angekoppeltem Zustand zur Landmaschine hin weist, wird hier und nachfolgend als Ankopplungsseite bezeichnet.

Weiterhin weist das Anbaugerät wenigstens ein Fahrwerkmodul auf. Ein Anbindungselement des jeweiligen Fahrwerkmoduls ist mit dem Rahmen verbunden, zum Beispiel über eine stoffschlüssige, formschlüssige und/oder kraftschlüssige Verbindung. Die Verbindung kann lösbar ausgebildet sein, so dass das Fahrwerkmodul zerstörungsfrei demontiert werden kann. Das Aufhängungselement weist wenigstens ein Laufrad auf, das um eine Radachse drehbar am Aufhängungselement gelagert ist. Der Kürze halber wird nachfolgend auch von "einem Laufrad" gesprochen, was sich aber auf "wenigstens ein Laufrad" bezieht, sofern nicht explizit mehrere Laufräder ausgeschlossen werden. Das Aufhängungselement ist in der Regel in sich starr ausgebildet, kann aber aus einzelnen, starr miteinander verbundenen Elementen bestehen. Es ist mechanisch sowie hinsichtlich des Kraftflusses zwischen dem Anbindungselement (und dem Rahmen) einerseits und dem wenigstens einen Laufrad andererseits zwischengeordnet. Das Anbindungselement kann insbesondere horizontal seitlich des Rahmens angeordnet sein, insbesondere auf der Ankopplungsseite und/oder benachbart zu einem Ankopplungsbereich, welcher an die Landmaschine ankoppelbar ist.

Das Aufhängungselement ist verstellbar zwischen einer Transportposition, in der das wenigstens eine Laufrad wenigstens teilweise niedriger als der Rahmen angeordnet ist, um diesen zu stützen, und einer Arbeitsposition, in der es gegenüber der Transportposition wenigstens überwiegend aufwärts verlagert ist. Es findet also eine Aufwärtsverlagerung bezüglich der Vertikalen statt, wobei die Begriffe "vertikal" und "horizontal" sich auf die bestimmungsgemäße Ausrichtung des Anbaugeräts beziehen, wenn dieses an die Landmaschine angekoppelt ist. Die vertikale Richtung stimmt somit mit der Hochachse der Landmaschine überein. In der Transportposition, welche dem Transportmodus entspricht, ist das wenigstens eine Laufrad wenigstens teilweise niedriger angeordnet als der Rahmen. Es hat normalerweise Bodenkontakt und stützt somit den Rahmen (und das Anbaugerät insgesamt) anteilig. Entsprechend wird das Anbaugerät, insbesondere dessen Gewicht, im Transportmodus nur zum Teil von der Landmaschine getragen. Somit kann die Achslast auf Seiten der Landmaschine reduziert werden und unter einer für die Straßenfahrt vorgeschriebenen Grenze (beispielsweise 11,5 t pro Achse) gehalten werden. Die Arbeitsposition entspricht dem Arbeitsmodus, insbesondere ist er für diesen vorgesehen. Im Arbeitsmodus wäre die Transportposition kontraproduktiv, da sie die Bodenfreiheit des Anbaugeräts deutlich reduzieren würde. Das wenigstens eine Laufrad würde dauerhaft oder immer wieder Kontakt mit dem Boden des zu bearbeitenden Feldes haben, was die Feldbearbeitung eher behindern würde. Eine Reduzierung der Achslast ist im Gegensatz zur Straßenfahrt nicht nötig. In der Arbeitsposition ist das Fahrwerk im Verhältnis zur Transportposition - überwiegend oder insgesamt - aufwärts verlagert. Hierdurch kann ein Bodenkontakt des Laufrades verhindert werden. Normalerweise wird die Verstellung durch wenigstens einen (elektrisch, pneumatisch oder hydraulisch betreibbaren) Aktor bewirkt. Es wäre im Rahmen der Erfindung allerdings auch eine manuelle oder mechanisch gekoppelte Verstellung denkbar. Der wenigstens eine Aktor wirkt mittelbar oder unmittelbar zwischen dem Anbindungselement und dem Aufhängungselement. Ein derartiger Aktor ist bevorzugt von außerhalb des Anbaugeräts ansteuerbar, beispielsweise von der Landmaschine aus, wenn das Anbaugerät an dieser angekoppelt ist.

Erfindungsgemäß ist das Aufhängungselement durch einen Verstellmechanismus derart mit dem Anbindungselement verbunden, dass es mittels einer Kombination aus einer wenigstens anteilig translatorisch aufwärts erfolgenden Hubbewegung und einer rotatorisch um eine aufwärts verlaufende Verstellachse erfolgenden Schwenkbewegung aus der Transportposition in die Arbeitsposition verstellbar ist. Der Verstellmechanismus kann den o.g. wenigstens einen Aktor aufweisen, er kann zusätzlich oder alternativ auch wenigstens ein passiv-mechanisches Element aufweisen, das der Kraftübertragung und/oder der Führung des Aufhängungselements relativ zum Anbindungselement dient, zum Beispiel ein Element zur Linearführung, einen Führungsarm, einen Umlenkhebel, ein Zugseil oder eine Zugstange etc. Es ist möglich, dass Elemente des Verstellmechanismus einstückig mit dem Aufhängungselement und/oder dem Anbindungselement ausgebildet sind und somit auch als Teil des Aufhängungs- und/oder Anbindungselements angesehen werden können.

Der Verstellmechanismus ist derart eingerichtet, dass das Aufhängungselement mittels einer Kombination aus zwei Bewegungen aus der Transportposition in die Arbeitsposition verstellt werden kann. Zum einen erfolgt eine Hubbewegung des Aufhängungsteils gegenüber dem Rahmen, die wenigstens anteilig translatorisch aufwärts gerichtet ist. Durch diese Hubbewegung wird das Aufhängungselement (und somit das Laufrad) erfindungsgemäss insgesamt aufwärts verlagert. Die Hubbewegung muss nicht parallel zur Hochachse der Landmaschine und/oder des Anbaugeräts erfolgen, sie kann auch Bewegungsanteile entlang der Längsachse und/oder der Querachse aufweisen. Sie kann auch rotatorische Bewegungsanteile enthalten, die die translatorischen Bewegungsanteile überlagern. Insbesondere kann es sich jedoch um eine rein translatorische Bewegung handeln. Die Hubbewegung kann insbesondere geradlinig erfolgen, sie könnte aber zum Beispiel auch entlang einer ganz oder teilweise gekrümmten Bewegungsbahn erfolgen. Außerdem erfolgt erfindungsgemäss eine Schwenkbewegung die rotatorisch ist und bei der eine Drehung um aufwärts verlaufende Verstellachse erfolgt. Das heißt das Aufhängungselement dreht sich insgesamt um diese Verstellachse. Die Verstellachse verläuft aufwärts, aber nicht zwangsläufig parallel zur Hochachse der Landmaschine und/oder des Anbaugeräts, sie kann gegenüber der Hochachse auch in Richtung der Längsachse und/oder der Querachse geneigt sein. Vorteilhaft verläuft die Verstellachse in einem Winkel von höchstens 30°, bevorzugt höchstens 20°, weiter bevorzugt höchstens 10°, zur Hochachse. Bevorzugt erfolgt die Hubbewegung in einem Winkel von höchstens 30°, höchstens 20° oder höchstens 10° zur Verstellachse. Ebenfalls bevorzugt erfolgt die Hubbewegung in einem Winkel von höchstens 30°, höchstens 20° oder höchstens 10° zur Hochachse. Die gesamte Verstellbewegung kann prinzipiell noch weitere Bewegungen beinhalten. Es ist aber stark bevorzugt, dass sie nur aus der Hubbewegung und der Schwenkbewegung besteht. Eine Kombination aus Hubbewegung und Schwenkbewegung schließt hier die Möglichkeit ein, dass die genannten Bewegungen zeitlich parallel und/oder nacheinander erfolgen. Sofern die Bewegungen (ganz oder teilweise) zeitlich parallel erfolgen, kommt es zu einer Überlagerung der Bewegungen.

Das erfindungsgemäße Anbaugerät ermöglicht einen effizienten Wechsel zwischen der Transportposition, in welcher es teilweise durch das wenigstens eine Laufrad getragen wird, und der Arbeitsposition, in der es normalerweise vollständig von der Landmaschine getragen wird, und genutzt werden kann, ohne dass das wenigstens eine Fahrwerkmodul demontiert werden müsste oder den Einsatz des Anbaugeräts behindert. Erreicht wird der effiziente Wechsel durch die Kombination aus Hubbewegung und Schwenkbewegung, die sowohl gegenüber einer rein translatorischen Bewegung als auch gegenüber einer rein rotatorischen Bewegung vorteilhaft ist. Die Hubbewegung ermöglicht als wenigstens anteilig translatorisch aufwärts gerichtete Verlagerung ein gewissermaßen direktes Anheben, durch welches das oder die Laufräder schnell vom Boden abgehoben werden können. Die Schwenkbewegung gestattet eine Veränderung der Ausrichtung des Aufhängungselements mit dem Laufrad, so dass zum Beispiel ein Zusammenstoßen mit dem Rahmen vermieden werden kann, welches bei einer reinen Hubbewegung möglich wäre. Außerdem kann die Schwenkbewegung ermöglichen, das Aufhängungselement mit dem Laufrad in platzsparender Weise am Rahmen zu positionieren, was mit einer reinen Hubbewegung u.U. nicht möglich wäre. Umgekehrt erlaubt die Einbeziehung der translatorischen Hubbewegung u.U. ein platzsparendes Verstellen in einer Weise, die mit einer reinen Schwenkbewegung nicht möglich wäre.

Um eine Bodenberührung zu vermeiden und somit eine optimale Bodenfreiheit des Anbaumoduls zu gewährleisten, kann das wenigstens eine Laufrad in der Arbeitsposition wenigstens überwiegend vertikal zumindest auf Höhe des Rahmens angeordnet sein. Das heißt der überwiegende Teil des Laufrads ist bezüglich der Hochachse auf Höhe des Rahmens angeordnet, also wenigstens so hoch wie ein unterster Teil des Rahmens. Insbesondere kann dies für das gesamte Laufrad gelten.

Für einen sicheren Transport sowie für eine gleichmäßige Verteilung des Gewichts des Anbaugeräts sind normalerweise eine Mehrzahl von Laufrädern notwendig, die in der Regel symmetrisch angeordnet sind. Insbesondere können wenigstens zwei Fahrwerkmodule mit dem Rahmen verbunden sein, wobei an jedem Aufhängungselement genau ein Laufrad gelagert ist. Die Fahrwerkmodule sind normalerweise symmetrisch zur Längsmittelebene des Anbaugeräts und/oder der Landmaschine angeordnet. Vorteilhaft können genau zwei Anbaumodule vorgesehen sein.

Eine platzsparende Schwenkbewegung kann insbesondere vorsehen, dass die Verstellachse durch das Aufhängungselement und/oder durch wenigstens ein Laufrad hindurch verläuft. Dabei kann es sich insbesondere um das einzige Laufrad des Fahrwerkmoduls handeln. Als Verstellachse wird hier die geometrische Achse betrachtet, um die die Schwenkbewegung erfolgt, die gewissermaßen unendlich lang ist.

Es ist besonders bevorzugt, dass die Hubbewegung parallel zur Verstellachse ausgerichtet ist. Das Aufhängungselement mit dem daran angeordneten Laufrad dreht sich also um die Verstellachse, entlang welcher es auch translatorisch angehoben wird. Soweit die Hubbewegung und die Schwenkbewegung gleichzeitig erfolgen, bewegt sich das Aufhängungselement somit schraubenlinienartig. Hierdurch erfolgt die Drehung u.U. in besonders platzsparender Weise. Dies gilt insbesondere dann, wenn die Verstellachse innerhalb des Aufhängungselements und/oder des Laufrads verläuft.

Eine platzsparende Anordnung des Laufrads lässt sich im Allgemeinen dadurch realisieren, dass die Schwenkbewegung eine Drehung des Aufhängungselements um die Verstellachse um einen Winkel zwischen 45° und 120°, bevorzugt zwischen 70° und 100°, weiter bevorzugt zwischen 80° und 95°, beinhaltet. Insbesondere kann eine Drehung um 90° erfolgen. Das heißt das Laufrad wird gegenüber der Transportposition in der Arbeitsposition quer gestellt, so dass es normalerweise in Längsrichtung möglichst wenig Platz einnimmt. Dies setzt voraus, dass die Breite des Laufrads deutlich kleiner ist als sein Durchmesser, was meistens der Fall ist. Auf diese Weise kann das Laufrad zum Beispiel in optimaler Weise in Längsrichtung zwischen dem Rahmen und der Landmaschine angeordnet werden. Es versteht sich, dass zu den o.g. Winkeln jeweils 180° oder ein Vielfaches hiervon hinzuaddiert werden könnte, was zu einer ähnlich platzsparenden Anordnung des Laufrads in der Arbeitsposition führen würde. Allerdings ist ein Schwenken um derart große Winkel (zum Beispiel 225° statt 45°) im Allgemeinen nicht bevorzugt.

Der Verstellmechanismus kann einen Tragarm aufweisen, mit welchem das Aufhängungselement um eine erste Schwenkachse schwenkbar verbunden ist und der um die Verstellachse schwenkbar und translatorisch aufwärts verschiebbar mit dem Anbindungselement verbunden ist. Entsprechend der o.g. Ausgestaltung kann der Tragarm bevorzugt parallel zur Verstellachse verschiebbar sein. Die erste Schwenkachse verläuft bevorzugt horizontal. Außerdem verläuft sie bevorzugt senkrecht zur Verstellachse. Durch die Schwenkbarkeit des Aufhängungselements gegenüber dem Tragarm ist eine Beweglichkeit, insbesondere vertikale Beweglichkeit, des Aufhängungselements unabhängig von der Bewegung des Tragarms gegeben.

Vorteilhaft ist der Tragarm mit dem Anbindungselement über ein entlang der Verstellachse wirkendes Federelement verbunden. Hierdurch kann das Anbindungselement zusammen mit dem Tragarm gegenüber dem Anbindungselement einfedern, unabhängig von seiner Beweglichkeit gegenüber dem Tragarm. Das Federelement kann beispielsweise als Metallfeder, insbesondere Schraubenfeder, ausgebildet sein, als Elastomerfeder, oder bevorzugt als Gasdruckfeder. Das genannte Federelement ermöglicht eine schnell erfolgende Bewegung des Laufrads gegenüber dem Rahmen, so dass dieses auch auf kurzzeitig auftretende Unebenheiten reagieren kann.

Bevorzugt ist der Verstellmechanismus dazu eingerichtet, die Hubbewegung und die Schwenkbewegung wenigstens überwiegend gleichzeitig auszuführen. "Überwiegend gleichzeitig "bedeutet in diesem Zusammenhang, dass über 50 % der Dauer der Hubbewegung sich zeitlich mit der Schwenkbewegung überschneiden. Die zeitliche Überschneidung kann auch größer sein, beispielsweise über 80 %.

Eine zeitliche Überschneidung kann beispielsweise durch zwei separate Antriebe realisiert werden, die überwiegend gleichzeitig betrieben werden. Eine andere Möglichkeit besteht darin, dass die Hubbewegung und die Schwenkbewegung durch den Verstellmechanismus zwangsgekoppelt sind. Gemäß einer entsprechenden Ausgestaltung weist der Verstellmechanismus eine Drehführung auf, durch welche die Verschiebung des Tragarms entlang der Verstellachse an die Drehung um die Verstellachse zwangsgekoppelt ist. Die Drehführung sorgt für eine Zwangskopplung, so dass die Hubbewegung entlang der Verstellachse nicht ohne die Schwenkbewegung um die Verstellachse erfolgen kann (und umgekehrt). Die Schwenkbewegung kann gleichmäßig entlang eines Hubwegs der Hubbewegung erfolgen. Sie könnte aber auch unregelmäßig erfolgen, beispielsweise derart, dass sie nur auf einem Teilweg stattfindet oder dass sie zu einem Ende des Hubwegs hin zunimmt.

Die Drehführung kann eine stationär am Anbindungselement angeordnete Führungskulisse aufweisen sowie ein in der Führungskulisse verschiebbar geführtes Führungselement, welches mit dem Tragarm drehfest sowie verschiebungsfest bezüglich der Verstellachse verbunden ist. Das Führungselement kann starr am Tragarm angeordnet sein oder sogar einstückig mit diesem ausgebildet sein. Alternativ ist es beispielsweise möglich, dass das Führungselement als Führungsrolle ausgebildet ist, die drehbar am Tragarm gelagert ist. Die entsprechende Drehachse einer solchen Führungsrolle ist dabei allerdings stationär am Tragarm angeordnet. Dadurch, dass das Führungselement drehfest sowie verschiebungsfest bezüglich der Verstellachse ist, werden sowohl axiale Kräfte als auch Drehmomente um die Verstellachse, welche auf das Führungselement wirken, auf den Tragarm übertragen. Die Führungskulisse kann in einem Rohrabschnitt des Anbindungselements ausgebildet sein, welcher den Tragarm oder einen Teil des Tragarms außenseitig umgibt. Das entsprechende Führungselement ragt vom Tragarm ab und greift in die Führungskulisse ein.

Gemäß einer vorteilhaften Variante weist die Drehführung einen Axialführungsabschnitt auf, durch welchen der Tragarm benachbart zur Transportposition drehfest bezüglich der Verstellachse geführt ist. Das heißt wenn das Aufhängungselement benachbart zur Transportposition angeordnet ist, führt eine Verschiebung entlang der Verstellachse nicht zu einer hieran gekoppelten Schwenkbewegung, sondern das Aufhängungselement und das hieran gekoppelte Laufrad verbleiben in derselben Ausrichtung bezüglich der Verstellachse. Hierdurch wird ermöglicht, dass der Tragarm im Bereich der Transportposition trotz der Drehführung gegenüber dem Anbindungselement einfedern kann, ohne dass hieraus ein unerwünschter Lenkeffekt auf das Laufrad resultiert. Der Axialführungsabschnitt kann beispielsweise an einer Führungskulisse oder Führungsbahn der Drehführung ausgebildet sein und verläuft axial bezüglich der Verstellachse. An den Axialführungsabschnitt kann sich ein Drehführungsabschnitt anschließen, der gegenüber der Verstellachse geneigt ist und die Zwangskopplung von Hubbewegung und Schwenkbewegung bewirkt.

Eine Ausführungsform sieht vor, dass der Tragarm einen parallel zur Verstellachse verlaufenden Stangenabschnitt aufweist, wobei das Anbindungselement einen außenseitig am Stangenabschnitt anliegenden Rohrabschnitt aufweist, gegenüber dem der Stangenabschnitt entlang der Verstellachse verschiebbar und um die Verstellachse drehbar ist. Der Stangenabschnitt kann auch als Hohlstange ausgebildet sein. Der Rohrabschnitt umgibt den Stangenabschnitt ganz oder wenigstens überwiegend außenseitig und bildet somit quer zur Verstellachse einen Formschluss, so dass eine translatorische Verschiebung nur in Richtung der Verstellachse möglich ist. Allerdings sind der Innenquerschnitt des Rohrabschnitts und der Außenquerschnitt des Stangenabschnitts so aufeinander abgestimmt, dass sich der Stangenabschnitt (und somit der gesamte Tragarm) bezüglich des Rohrabschnitt um die Verstellachse drehen kann. Normalerweise sind beide genannten Profile kreisförmig, es wären allerdings auch Abwandlungen denkbar, beispielsweise derart, dass sich die beiden Profile nur um einen bestimmten Maximalwinkel gegeneinander verdrehen lassen. Diese Ausführungsform wird normalerweise mit einer oben erwähnten Drehführung kombiniert, beispielsweise mit der Kombination einer Führungskulisse und eines Führungselements. Das Führungselement ist dabei mit dem Stangenabschnitt verbunden.

Zusätzlich zu der schwenkbaren Anbindung an den Tragarm kann das Aufhängungselement eine weitere bewegliche Anbindung an das Anbindungselement aufweisen. Eine Ausgestaltung sieht vor, dass das Aufhängungselement auf einer der ersten Schwenkachse bezüglich der Radachse des wenigstens einen Laufrades entlang der Horizontalen gegenüberliegenden Seite unabhängig vom Tragarm über eine zweite Schwenkachse indirekt mit dem Anbindungselement verbunden ist. In diesem Fall ist das Aufhängungselement also über eine erste und eine zweite Schwenkachse angebunden, wobei die beiden Schwenkachsen einander bezüglich der horizontalen Radachse gegenüber liegen. Dies bedeutet, dass diese Schwenkachsen auf unterschiedlichen Seiten einer senkrechten Ebene durch die Radachse liegen. In jedem Fall ist das Anbindungselement auf unterschiedlichen Seiten, nämlich über die zwei Schwenkachsen, am Aufhängungselement abgestützt. Der Kraftfluss zwischen dem Laufrad und dem Rahmen teilt sich somit auf zwei unterschiedliche Wege auf, von denen einer über die erste Schwenkachse und der andere über die zweite Schwenkachse verläuft. Gleichzeitig ermöglicht jede der Schwenkachsen eine Bewegung auf Seiten der jeweils anderen Schwenkachse, so dass sich das Anbindungselement entweder beidseitig oder auf nur einer Seite vertikal bewegen kann, insbesondere einfedern kann. Bevorzugt verlaufen die erste Schwenkachse und/oder die zweite Schwenkachse parallel zur Radachse.

Eine Ausführungsform sieht vor, dass der Verstellmechanismus einen wenigstens indirekt mit dem Anbindungselement sowie über die zweite Schwenkachse mit dem Aufhängungselement verbundenen Linearaktor aufweist, der eingerichtet ist, die Verstellung zwischen der Arbeitsposition und der Transportposition zu bewirken. Der Linearaktor kann insbesondere als Hydraulikzylinder ausgebildet sein. Es kann sich um einen einfachwirkenden oder doppeltwirkenden Hydraulikzylinder handeln. Der Linearaktor ist hinsichtlich des Kraftflusses zwischen dem Anbindungselement und dem Aufhängungselement angeordnet, wobei die Anbindung zum Aufhängungselement über die zweite Schwenkachse gegeben ist. Das heißt, in der Arbeitsposition stützt sich das Anbindungselement einerseits über den Tragarm und die erste Schwenkachse sowie andererseits über den Linearaktor und die zweite Schwenkachse am Aufhängungselement und dem daran angeordneten Laufrad ab. Durch Ausfahren des Linearaktors kann das Anbindungselement in die Transportposition verstellt werden, während er durch Zusammenziehen des Linearaktors in die Arbeitsposition verstellbar ist.

Der Linearaktor kann insbesondere drehfest bezüglich der Verstellachse mit dem Anbindungselement verbunden sein und sowohl gegenüber dem Anbindungselement als auch gegenüber dem Aufhängungselement wenigstens zweiachsig schwenkbar sein. Die Verbindung zwischen dem Linearaktor und dem Anbindungselement ist derart, dass sie keine Rotation um die Verstellachse zulässt. Andererseits ist der Linearaktor wenigstens indirekt mit dem Aufhängungselement verbunden, welches im Zuge der Schwenkbewegung um die Verstellachse rotiert. Der Linearaktor kann der entsprechenden Rotation nur dann folgen, wenn sich seine Ausrichtung gegenüber dem Anbindungselement sowie gegenüber dem Aufhängungselement ändert. Hierzu ist eine wenigstens zweiachsige Schwenkbarkeit vorgesehen, das heißt der Linearaktor kann sowohl gegenüber dem Anbindungselement als auch gegenüber dem Aufhängungselement um wenigstens zwei nicht-parallele, normalerweise zueinander senkrechte, Achsen schwenken.

Vorteilhaft ist der Linearaktor über ein wenigstens zweiachsiges Gelenk mit dem Anbindungselement verbunden und um eine im Winkel zur zweiten Schwenkachse verlaufende dritte Schwenkachse schwenkbar mit einem Verbindungsteil verbunden, das um die zweite Schwenkachse schwenkbar mit dem Aufhängungselement verbunden ist. Das wenigstens zweiachsige Gelenk kann beispielsweise als Kugelgelenk ausgebildet sein, es könnte aber auch ein anderes im Stand der Technik bekanntes Gelenk sein, welches eine Schwenkbewegung um wenigstens zwei Achsen erlaubt. Für die Verbindung zwischen dem Linearaktor und dem Anbindungselement ist bei dieser Ausführungsform kein zweiachsiges Gelenk im eigentlichen Sinne vorgesehen, sondern der Linearaktor ist über eine dritte Schwenkachse mit einem Verbindungsteil verbunden, welches beispielsweise als Verbindungsgabel ausgebildet sein kann. Eine solche Verbindungsgabel kann mit zwei beabstandeten Abschnitten beiderseits des Laufrades angeordnet sein und mit jeweils einem Abschnitt des Aufhängungselements verbunden sein. Die Verbindung zwischen dem Verbindungsteil und dem Aufhängungselement ist über die zweite Schwenkachse gegeben. Bevorzugt verlaufen die zweite und die dritte Schwenkachse rechtwinklig zueinander. Sie stellen gewissermaßen zusammen ein zweiachsiges Schwenklager dar.

Der o.g. Linearaktor kann keine direkte Zugkraft auf den Tragarm ausüben, da das zwischengeordnete Anbindungselement sowohl gegenüber dem Linearaktor (über die zweite Schwenkachse) als auch gegenüber dem Tragarm (über die erste Schwenkachse) schwenkbar ist. Das heißt, wenn der Linearaktor eine aufwärtsgerichtete Zugkraft ausübt, könnte das Aufhängungselement einfach aufwärts schwenken, ohne dass daraus eine Aufwärtsbewegung des Tragarms resultieren würde. Dies kann dadurch verhindert werden, dass das Aufhängungselement und der Tragarm miteinander zusammenwirkende Anschlagabschnitte aufweisen, durch die ein Aufwärtsschwenken des Aufhängungselements um die erste Schwenkachse begrenzbar ist. Die Anschlagabschnitte sind so ausgebildet, dass sie beim Aufwärtsschwenken des Aufhängungselements aneinanderstoßen und so die weitere Schwenkbewegung blockieren. Dementsprechend wird eine weitere nach oben gerichtete Zugkraft, die auf das Anbindungselement wirkt, auch auf den Tragarm übertragen und zieht diesen nach oben. Über eine oben beschriebene Drehführung resultiert im Weiteren die Schwenkbewegung des Tragarms und des hiermit verbundenen Aufhängungselements.

Durch die Erfindung wird außerdem ein Fahrwerkmodul für ein Anbaugerät zur Feldbearbeitung zur Verfügung gestellt, welches Anbaugerät einen Rahmen aufweist, der wenigstens indirekt an eine Landmaschine koppelbar ist, so dass diese das Anbaugerät wenigstens teilweise stützt, wobei das Fahrwerkmodul ein zur Verbindung mit dem Rahmen vorgesehenes Anbindungselement aufweist sowie ein Aufhängungselement mit wenigstens einem um eine Radachse drehbaren Laufrad, wobei das Aufhängungselement gegenüber dem Anbindungselement verstellbar ist zwischen einer Transportposition, in der das wenigstens eine Laufrad wenigstens teilweise niedriger als der Rahmen angeordnet ist, um diesen zu stützen, und einer Arbeitsposition, in der es gegenüber der Transportposition wenigstens überwiegend aufwärts verlagert ist.

Erfindungsgemäß ist das Aufhängungselement durch einen Verstellmechanismus derart mit dem Anbindungselement verbunden, dass es mittels einer Kombination aus einer wenigstens anteilig translatorisch aufwärts erfolgenden Hubbewegung und einer rotatorisch um eine aufwärts verlaufende Verstellachse erfolgenden Schwenkbewegung aus der Transportposition in die Arbeitsposition verstellbar ist.

Die genannten Begriffe wurden bereits mit Bezug auf das erfindungsgemäße Anbaugerät erläutert. Bevorzugte Ausführungsformen des Fahrwerkmoduls entsprechen denen des erfindungsgemäßen Anbaugeräts.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Ansicht eines erfindungsgemäßen Anbaugeräts mit Fahrwerkmodulen in einer Transportposition;
- Fig. 2: eine perspektivische Detailansicht des Anbaugeräts aus Fig. 1 mit einem Fahrwerkmodul in der Transportposition;
- Fig. 3: eine Fig.2 entsprechende Ansicht mit dem Fahrwerkmodul in einer Zwischenposition;
- Fig. 4: eine Fig.2 entsprechende Ansicht mit dem Fahrwerkmodul in einer Arbeitsposition; sowie
- Fig. 5: eine teilweise Schnittdarstellung einer Seitenansicht des Fahrwerkmoduls aus Fig.1-4.

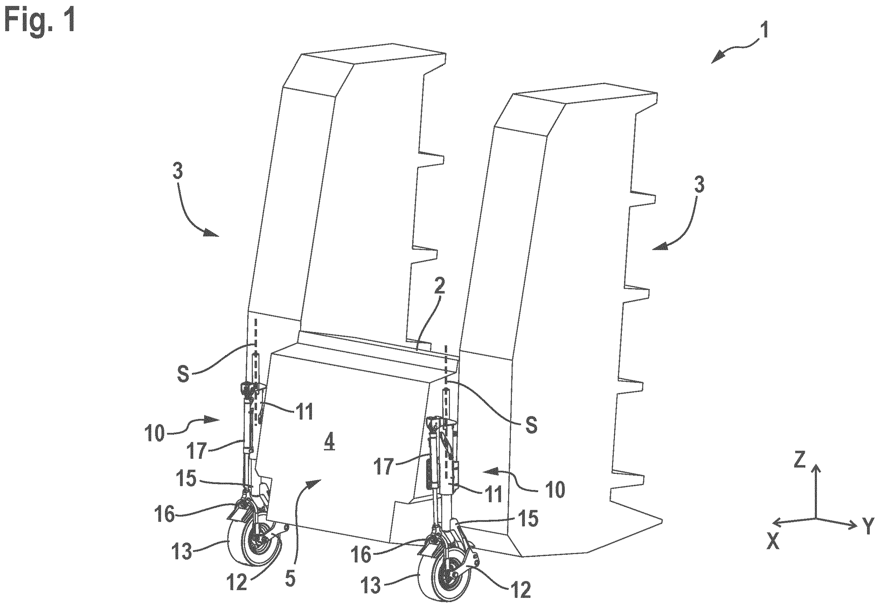

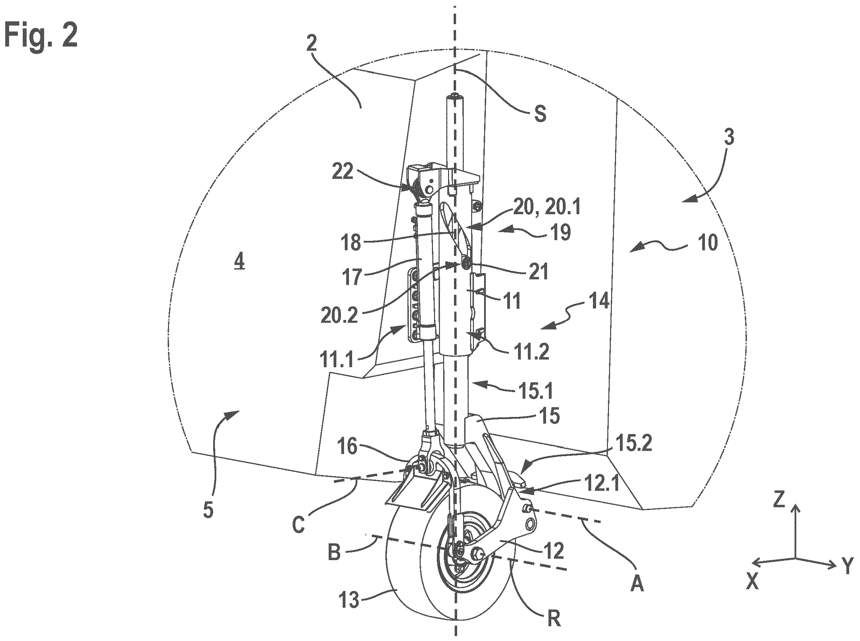

Fig. 1 zeigt ein erfindungsgemäßes Anbaugerät 1 für eine (nicht dargestellte) Landmaschine, in diesem Fall einen Maisvorsatz für einen Feldhäcksler. Das Anbaugerät 1 weist einen Rahmen 2 auf. Dieser wird mit einem hier schematisch dargestellten Ankopplungsbereich 4, der auf einer Ankopplungsseite 5 angeordnet ist, an den Feldhäcksler gekoppelt. In einem in Fig.1 und 2 dargestellten Transportmodus ist das Anbaugerät 1 teilweise durch den Feldhäcksler gestützt. In den Figuren sind, bezogen auf den angekoppelten Zustand des Anbaugeräts 1, die Längsachse X, die Querachse Y sowie die Hochachse Z des Feldhäckslers eingezeichnet. Am Rahmen 2 sind seitlich in Richtung der Querachse Y zwei Seitenteile 3 angeordnet, die für den Transportmodus aufwärts geschwenkt werden, um die Breite für eine Straßenfahrt zu reduzieren. Die vorgesehene Fahrtrichtung verläuft dabei (anti-)parallel zur Längsachse X.

Das Anbaugerät 1 weist außerdem zwei Fahrwerkmodule 10 auf, die symmetrisch zur Längsmittelebene des Rahmens 2 auf der Ankopplungsseite 5 angeordnet sind. Jedes Fahrwerkmodul 10 ist mit einem flanschartigen Anbindungsabschnitt 11.1 eines Anbindungselements 11 am Rahmen 2 angeschraubt. Das Anbindungselement 11 weist einen starr mit dem Anbindungsabschnitt 11.1 verbundenen Rohrabschnitt 11.2 auf, in dem ein Stangenabschnitt 15.1 eines Tragarms 15 aufgenommen ist. Der Stangenabschnitt 15.1 ist gegenüber dem Rohrabschnitt 11.2 entlang einer Verstellachse S translatorisch verschiebbar und um die Verstellachse S schwenkbar. Die Verstellachse S verläuft senkrecht, also parallel zur Hochachse Z und verläuft durch das Laufrad 13. Der Tragarm 15 ist seinerseits über eine hier waagerecht verlaufende erste Schwenkachse A mit einem Aufhängungselement 12 verbunden. Das Aufhängungselement 12, welches auch als Aufhängungsschwinge bezeichnet werden kann, dient als Aufhängung für ein Laufrad 13, das um eine Radachse R drehbar ist. Auf einer bezüglich der Horizontalen gegenüber der ersten Schwenkachse angeordneten Seite der Radachse R ist das Aufhängungselement 12 über eine zweite Schwenkachse B mit einer Verbindungsgabel 16 verbunden. Die Radachse R und die zweite Schwenkachse B verlaufen hier parallel zur ersten Schwenkachse A. Die Verbindungsgabel 16 dient als Verbindungselement, welches über eine dritte Schwenkachse C mit einem Linearaktor, genauer gesagt einem Hydraulikzylinder 17 verbunden ist. Die dritte Schwenkachse C verläuft senkrecht zur zweiten Schwenkachse B, so dass insgesamt eine zweiachsige Schwenkbarkeit des Hydraulikzylinders 17 gegenüber dem Aufhängungselement 12 gegeben ist. An einem oberen Ende ist der Hydraulikzylinder 17 über ein Kugelgelenk 22 mit einem Aufnahmeabschnitt 11.3 des Anbindungselements 11 verbunden. In diesem Fall ist der Aufnahmeabschnitt 11.3 separat vom Rohrabschnitt 11.2 gefertigt und mit diesem verschraubt, es wäre aber auch eine wenigstens teilweise einstückige Fertigung denkbar. Insgesamt ist der Hydraulikzylinder 17 sowohl mit dem Anbindungselement 11 als auch mit dem Aufhängungselement 12 zweiachsig schwenkbar verbunden. Er kann als doppeltwirkender Zylinder ausgebildet sein. Es wäre allerdings auch eine einfachwirkende Variante denkbar, bei der ein aktives Zusammenziehen des Zylinders, aber nur ein passives Expandieren möglich ist.

Der Stangenabschnitt 15.1 ist über eine Gasdruckfeder 18 mit dem Aufnahmeabschnitt 11.3 des Anbindungselements 11 verbunden. Dies ermöglicht ein Einfedern des Laufrads 13 gegenüber dem Anbindungselement 11 sowie gegenüber dem Rahmen 2. Außerdem wirkt der Stangenabschnitt 15.1 mit dem Rohrabschnitt 11.2 über eine Drehführung 19 zusammen. Diese ist durch zwei (um 180° zueinander versetzte) Führungskulissen 20 innerhalb des Rohrabschnitts 11.2 gebildet sowie durch zwei hierin geführte Führungselemente 21, die in diesem Fall als Führungsrollen drehbar am Stangenabschnitt gelagert sind. Jede Führungskulisse weist einen schraubenlinienartig ausgebildeten Drehführungsabschnitt 20.1 auf sowie einen sich hieran anschließenden, wesentlich kürzeren Axialführungsabschnitt 20.2, der parallel zur Verstellachse S verläuft. Solange das jeweilige Führungselement 21 benachbart zur in Fig. 1 gezeigten Transportposition im Axialführungsabschnitt 20.2 geführt ist, bewegt sich der Tragarm 11 parallel zur Verstellachse S, ohne dass eine Drehung um die Verstellachse S erfolgt. Dies ermöglicht ein Einfedern entgegen der Rückstellkraft der Gasdruckfeder 18, ohne dass sich die Ausrichtung der Radachse R des Laufrades 13 verändert. Das Laufrad 13 kann somit schnell auf Bodenunebenheiten reagieren, wobei das Aufhängungselement 12 um die zweite Schwenkachse B schwenken kann. Unabhängig von der Gasdruckfeder 18 ist ein Einfedern auch durch den Hydraulikzylinder 17 möglich, wobei das Aufhängungselement 12 um die erste Schwenkachse A schwenkt, allerdings ist die Reaktionszeit der hierfür nötigen hydraulischen Belastungssteuerung begrenzt, weshalb dem Einfedern über die Gasdruckfeder 18 eine wichtige Schutzfunktion zukommt.

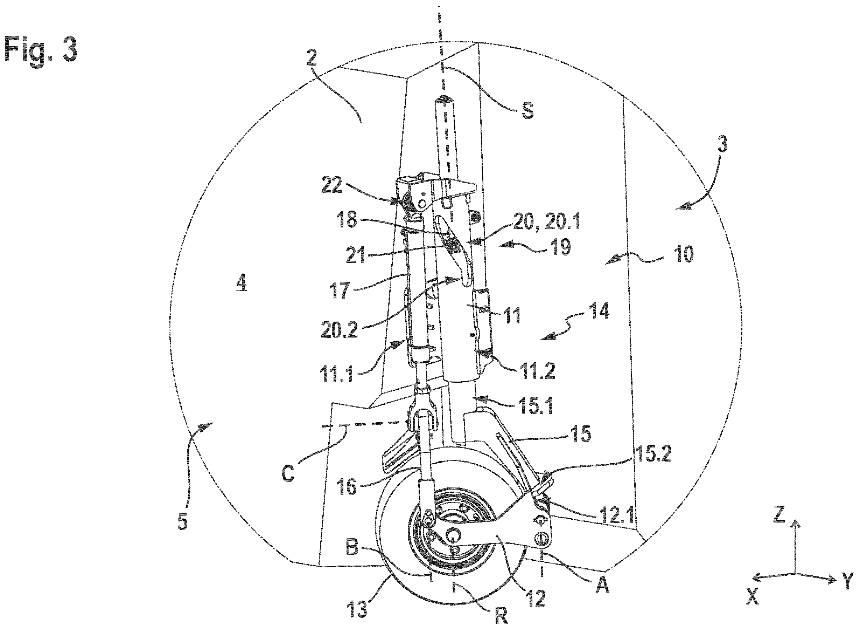

Wenn das Anbaugerät 1 in einem Arbeitsmodus auf dem Feld eingesetzt werden soll, wird das Aufhängungselement 12 mit dem Laufrad 13 in eine Arbeitsposition verstellt. Hierzu ist ein Verstellmechanismus 14 vorgesehen, zu welchem der Hydraulikzylinder 17 sowie die Elemente der Drehführung 19 gehören. Zunächst wird der Hydraulikzylinder 17 aktiv zusammengezogen, wodurch eine Zugkraft auf die Verbindungsgabel 16 und das hiermit verbundene Aufhängungselement 12 ausgeübt wird. Dies führt zunächst zu einem Aufwärtsschwenken des Aufhängungselements 12 gegenüber dem Tragarm 15 um die erste Schwenkachse A. Allerdings weisen das Aufhängungselement sowie der Tragarm 15 einander zugeordneten Anschlagelemente 12.1, 15.2 auf, die aneinanderstoßen, wie in Fig. 3 gezeigt, und das weitere Aufwärtsschwenken verhindern. Daher führt ein weiteres Zusammenziehen des Hydraulikzylinders 17 zu einem Anheben des Tragarms 15 entgegen der Rückstellkraft der Gasdruckfeder 18. Dabei verlässt das Führungselement 21 den Axialführungsabschnitt 20.2 und gelangt in den Drehführungsabschnitt 20.1, wodurch die translatorische Hubbewegung entlang der Verstellachse S an eine Schwenkbewegung um die Verstellachse S zwangsgekoppelt ist, d. h. der Tragarm 15 sowie das hiermit verbundene Aufhängungselement 12 mit dem Laufrad 13 drehen sich um die Verstellachse S, während sie angehoben werden.

Fig. 3 zeigt eine Zwischenposition, in der das Führungselement 21 ungefähr in der Mitte des Drehführungsabschnitts 20.1 angekommen ist, so dass eine Drehung um ca. 45° gegenüber der Transportposition erfolgt ist. Die oben erwähnte jeweils zweiachsige Schwenkbarkeit des Hydraulikzylinders 17 gegenüber dem Anbindungselement 11 und dem Aufhängungselement 12 sorgt dafür, dass er einerseits der Drehung des Aufhängungselements 12 um die Verstellachse S folgen kann, während er andererseits mit dem stationären Aufnahmeabschnitt 11.3 des Anbindungselements 11 verbunden ist.

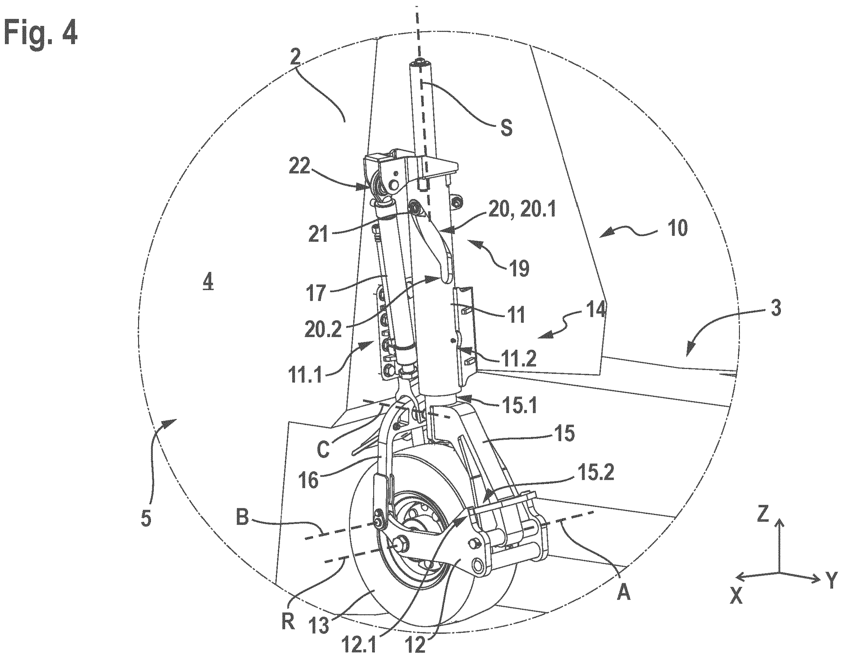

Wenn das jeweilige Führungselement 21 am oberen Ende der Führungskulisse 20 angekommen ist, hat das Aufhängungselement 12 eine in Fig. 4 dargestellte Arbeitsposition erreicht. Es ist dabei einerseits so weit gegenüber dem Rahmen 2 angehoben, dass sich das Laufrad 13 vollständig zumindest auf Höhe des Rahmens 2 befindet. Außerdem ist eine Drehung des Tragarms 15, des Aufhängungselements 12 sowie des Laufrads 13 um die Verstellachse S erfolgt, wobei der Schwenkwinkel im vorliegenden Beispiel 90° beträgt. Durch die entsprechende Verschwenkung kann das Laufrad 13 in platzsparender Weise zwischen dem Rahmen 2 und dem auf der Ankopplungsseite 5 benachbarten Landmaschine untergebracht werden. Die Seitenteile 3 werden zur Feldbearbeitung abwärts geschwenkt, wie in Fig.4 ansatzweise erkennbar ist. Dies kann vor, nach oder während des Verstellens der Fahrwerkmodule 10 erfolgen.

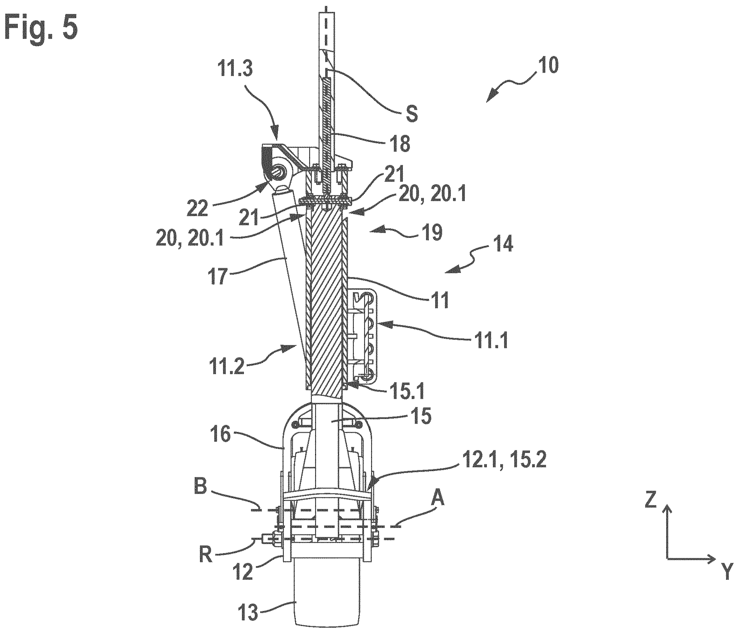

Das in Fig. 5 isoliert dargestellte Fahrwerkmodul 10 ist mit dem Rahmen 2 verschraubt und daher zerstörungsfrei von diesem lösbar. Es kann zur Wartung oder zum Austausch innerhalb kurzer Zeit demontiert werden. Außerdem ist es möglich, dass Fahrwerkmodul 10 mit unterschiedlichen anderen, hier nicht gezeigten Anbaugeräten zu kombinieren. Diese müssen lediglich eine geeignete näherungsweise senkrechte Fläche zur Anbringung des Anbindungsabschnitts 11.1 sowie Bohrungen zur Aufnahme der Verbindungsschrauben aufweisen. Selbstverständlich könnte auch über eine Modifikation des Anbindungsabschnitts 11.1 oder ein zwischengeordneter Adapter eine Anbindung ermöglicht werden, wenn keine derartige Fläche vorhanden ist.

## Patentansprüche

1. Anbaugerät (1) zur Feldbearbeitung, mit einem Rahmen (2), der wenigstens indirekt an eine Landmaschine koppelbar ist, so dass diese das Anbaugerät wenigstens teilweise stützt, sowie wenigstens einem Fahrwerkmodul (10), aufweisend ein mit dem Rahmen (2) verbundenes Anbindungselement (11) sowie ein Aufhängungselement (12), welches wenigstens ein um eine Radachse (R) drehbares Laufrad (13) aufweist und gegenüber dem Anbindungselement (11) verstellbar ist zwischen einer Transportposition, in der das wenigstens eine Laufrad (13) wenigstens teilweise niedriger als der Rahmen (2) angeordnet ist, um diesen zu stützen, und einer Arbeitsposition, in der es gegenüber der Transportposition wenigstens überwiegend aufwärts verlagert ist, wobei
das Aufhängungselement (12) durch einen Verstellmechanismus (14) derart mit dem Anbindungselement (11) verbunden ist, dass es mittels einer Kombination aus einer wenigstens anteilig translatorisch aufwärts erfolgenden Hubbewegung und einer rotatorisch um eine aufwärts verlaufende Verstellachse (S) erfolgenden Schwenkbewegung aus der Transportposition in die Arbeitsposition verstellbar ist, **dadurch gekennzeichnet, dass**
das Aufhängungselement (12) durch diese Hubbewegung insgesamt aufwärts verlagert wird, wobei außerdem die Schwenkbewegung erfolgt, die rotatorisch ist und bei der eine Drehung um die aufwärts verlaufende Verstellachse (S) erfolgt.

2. Anbaugerät nach Anspruch 1, **dadurch gekennzeichnet, dass** die Hubbewegung parallel zur Verstellachse (S) ausgerichtet ist.

3. Anbaugerät nach einem der vorangehenden Ansprüche, **dadurch gekennzeichnet, dass** die Schwenkbewegung eine Drehung des Aufhängungselements (12) um die Verstellachse (S) um einen Winkel zwischen 45° und 120°, bevorzugt zwischen 70° und 100°, weiter bevorzugt zwischen 80° und 95°, beinhaltet.

4. Anbaugerät nach einem der vorangehenden Ansprüche, **dadurch gekennzeichnet, dass** der Verstellmechanismus (14) einen Tragarm (15) aufweist, mit welchem das Aufhängungselement (12) um eine erste Schwenkachse (A) schwenkbar verbunden ist und der um die Verstellachse (S) schwenkbar und translatorisch aufwärts verschiebbar mit dem Anbindungselement (11) verbunden ist.

5. Anbaugerät nach einem der vorangehenden Ansprüche, **dadurch gekennzeichnet, dass** der Verstellmechanismus (14) dazu eingerichtet ist, die Hubbewegung und die Schwenkbewegung wenigstens überwiegend gleichzeitig auszuführen.

6. Anbaugerät nach einem der Ansprüche 4 - 5, **dadurch gekennzeichnet, dass** der Tragarm (15) mit dem Anbindungselement (11) über ein entlang der Verstellachse (S) wirkendes Federelement (18) verbunden ist.

7. Anbaugerät nach einem der Ansprüche 4 - 6, **dadurch gekennzeichnet, dass** der Verstellmechanismus (14) eine Drehführung (19) aufweist, durch welche die Verschiebung des Tragarms (15) entlang der Verstellachse (S) an die Drehung um die Verstellachse (S) zwangsgekoppelt ist.

8. Anbaugerät nach einem der Anspruch 7, **dadurch gekennzeichnet, dass** die Drehführung (19) eine stationär am Anbindungselement (11) angeordnete Führungskulisse (20) aufweist sowie ein in der Führungskulisse (20) verschiebbar geführtes Führungselement (21), welches mit dem Tragarm (15) drehfest sowie verschiebungsfest bezüglich der Verstellachse (S) verbunden ist.

9. Anbaugerät nach einem der Ansprüche 7 - 8, **dadurch gekennzeichnet, dass** die Drehführung (19) einen Axialführungsabschnitt (20.2) aufweist, durch welchen der Tragarm (15) benachbart zur Transportposition drehfest bezüglich der Verstellachse (S) geführt ist.

10. Anbaugerät nach einem der Ansprüche 4 - 9, **dadurch gekennzeichnet, dass** das Aufhängungselement (12) auf einer der ersten Schwenkachse (A) bezüglich der Radachse (R) des wenigstens einen Laufrades (13) entlang der Horizontalen gegenüberliegenden Seite unabhängig vom Tragarm (15) über eine zweite Schwenkachse (B) indirekt mit dem Anbindungselement (11) verbunden ist.

11. Anbaugerät nach einem der Anspruch 10, **dadurch gekennzeichnet, dass** der Verstellmechanismus (14) einen wenigstens indirekt mit dem Anbindungselement (11) sowie über die zweite Schwenkachse (B) mit dem Aufhängungselement (12) verbundenen Linearaktor (17) aufweist, der eingerichtet ist, die Verstellung zwischen der Arbeitsposition und der Transportposition zu bewirken.

12. Anbaugerät nach einem der Anspruch 11, **dadurch gekennzeichnet, dass** der Linearaktor (17) drehfest bezüglich der Verstellachse (S) mit dem Anbindungselement (11) verbunden ist und sowohl gegenüber dem Anbindungselement (11) als auch gegenüber dem Aufhängungselement (12) wenigstens zweiachsig schwenkbar ist.

13. Anbaugerät nach einem der Ansprüche 11 - 12, **dadurch gekennzeichnet, dass** der Linearaktor (17) über ein wenigstens zweiachsiges Gelenk (22) mit dem Anbindungselement (11) verbunden ist und um eine im Winkel zur zweiten Schwenkachse (B) verlaufende dritte Schwenkachse (C) schwenkbar mit einem Verbindungsteil (16) verbunden ist, das um die zweite Schwenkachse (B) schwenkbar mit dem Aufhängungselement (12) verbunden ist.

14. Anbaugerät nach einem der Ansprüche 4 - 13, **dadurch gekennzeichnet, dass** das Aufhängungselement (12) und der Tragarm (15) miteinander zusammenwirkende Anschlagabschnitte (12.1, 15.2) aufweisen, durch die ein Aufwärtsschwenken des Aufhängungselements (12) um die erste Schwenkachse (A) begrenzbar ist.

## Claims

1. Attachment (1) for field cultivation, comprising a frame (2) which can be coupled at least indirectly to an agricultural machine so that the machine supports the attachment at least in part, and at least one chassis module (10) having a connection element (11) connected to the frame (2) and a suspension element (12) which has at least one running wheel (13), which is rotatable about a wheel axis (R), and is adjustable relative to the connection element (11) between a transport position, in which at least part of the at least one running wheel (13) is arranged lower than the frame (2) in order to support the frame, and a working position, in which it is displaced at least predominantly upward relative to the transport position,
the suspension element (12) being connected to the connection element (11) by an adjustment mechanism (14) in such a way that it can be adjusted from the transport position into the working position by means of a combination of an at least partially translationally upward lifting movement and a rotational pivoting movement about an upwardly extending adjustment axis (S),
**characterized in that**
the suspension element (12) is displaced upward as a whole by this lifting movement, with the pivoting movement also taking place, which is rotational and in which a rotation takes place about the upwardly extending adjustment axis (S).

2. Attachment according to claim 1, **characterized in that** the lifting movement is aligned in parallel with the adjustment axis (S).

3. Attachment according to either of the preceding claims,
**characterized in that** the pivoting movement includes a rotation of the suspension element (12) about the adjustment axis (S) by an angle between 45° and 120°, preferably between 70° and 100°, more preferably between 80° and 95°.

4. Attachment according to any of the preceding claims,
**characterized in that** the adjustment mechanism (14) has a support arm (15) to which the suspension element (12) is connected so as to be pivotable about a first pivot axis (A) and which is connected to the connection element (11) so as to be pivotable about the adjustment axis (S) and translationally displaceable upward.

5. Attachment according to any of the preceding claims,
**characterized in that** the adjustment mechanism (14) is designed to carry out the lifting movement and the pivoting movement at least predominantly simultaneously.

6. Attachment according to either of claims 4 - 5, **characterized in that** the support arm (15) is connected to the connection element (11) via a spring element (18) acting along the adjustment axis (S).

7. Attachment according to any of claims 4 - 6, **characterized in that** the adjustment mechanism (14) has a rotary guide (19) by means of which the displacement of the support arm (15) along the adjustment axis (S) is forcibly coupled to the rotation about the adjustment axis (S).

8. Attachment according to one of claim 7, **characterized in that** the rotary guide (19) has a guide slot (20) arranged stationarily on the connection element (11) and a guide element (21) which is displaceably guided in the guide slot (20) and which is connected to the support arm (15) against rotation and against displacement with respect to the adjustment axis (S).

9. Attachment according to either of claims 7 - 8, **characterized in that** the rotary guide (19) has an axial guide portion (20.2) by means of which the support arm (15) is guided adjacent to the transport position against rotation with respect to the adjustment axis (S).

10. Attachment according to any of claims 4 - 9, **characterized in that** the suspension element (12) is, independently of the support arm (15), indirectly connected to the connection element (11) via a second pivot axis (B) on a side opposite the first pivot axis (A) along the horizontal with respect to the wheel axis (R) of the at least one running wheel (13).

11. Attachment according to one of claim 10, **characterized in that** the adjustment mechanism (14) has a linear actuator (17) which is connected at least indirectly to the connection element (11) and via the second pivot axis (B) to the suspension element (12), which actuator is designed to effect the adjustment between the working position and the transport position.

12. Attachment according to one of claim 11, **characterized in that** the linear actuator (17) is connected to the connection element (11) against rotation with respect to the adjustment axis (S) and is pivotable in at least two axes relative to both the connection element (11) and the suspension element (12).

13. Attachment according to either of claims 11 - 12, **characterized in that** the linear actuator (17) is connected to the connection element (11) via an at least two-axis joint (22) and is connected, so as to be pivotable about a third pivot axis (C) running at an angle to the second pivot axis (B), to a connecting part (16) which is connected to the suspension element (12) so as to be pivotable about the second pivot axis (B).

14. Attachment according to any of claims 4 - 13, **characterized in that** the suspension element (12) and the support arm (15) have mutually interacting stop portions (12.1, 15.2) by means of which an upward pivoting of the suspension element (12) about the first pivot axis (A) can be limited.

## Revendications

1. Appareil (1) porté pour la culture des champs, comprenant un châssis (2), qui peut être accouplé au moins indirectement à une machine agricole, de manière à ce que celle-ci appuie au moins en partie l'appareil porté, ainsi qu'au moins un module (10) de mécanisme de roulement comportant un élément (11) d'attache assemblé au châssis (2) ainsi qu'un élément (12) de suspension, qui a au moins une roue (13) de roulement pouvant tourner autour d'un axe (R) de roue et est réglable par rapport à l'élément (11) d'attache entre une position de transport, dans laquelle la au moins une roue (13) de roulement est disposée au moins en partie plus bas que le châssis (2), afin d'appuyer celuici, et une position de travail, dans laquelle il est décalé vers le haut au moins principalement par rapport à la position de transport, dans lequel
l'élément (12) de suspension est relié par un mécanisme (14) de déplacement à l'élément (11) d'attache de manière à ce qu'il puisse, au moyen d'une combinaison d'un mouvement de levage s'effectuant au moins en partie en translation vers le haut et d'un mouvement de pivotement s'effectuant en rotation autour d'un axe (S) de réglage s'étendant vers le haut, passer de la position de transport à la position de travail,
**caractérisé en ce que**
l'élément (12) de suspension est déplacé vers le haut dans l'ensemble par ce mouvement de levage, dans lequel il s'effectue en outre le mouvement de pivotement, qui est de rotation et dans lequel il s'effectue une rotation autour de l'axe (S) de réglage s'étendant vers le haut.

2. Appareil porté suivant la revendication 1, **caractérisé en ce que** le mouvement de levage est dirigé parallèlement à l'axe (S) de réglage.

3. Appareil porté suivant l'une des revendications précédentes, **caractérisé en ce que** le mouvement de pivotement comporte une rotation de l'élément (12) de suspension autour de l'axe (S) de réglage d'un angle compris entre 45° à 120°, de préférence entre 70° et 100°, d'une manière encore plus préférée entre 80° et 95°.

4. Appareil porté suivant l'une des revendications précédentes, **caractérisé en ce que** le mécanisme (14) de déplacement a un bras (15) porteur, auquel l'élément (12) de suspension est assemblé à pivotement autour d'un premier axe (A) de pivotement et qui est assemblé à l'élément (11) d'attache à pivotement autour de l'axe (S) de réglage et à coulissement vers le haut en translation.

5. Appareil porté suivant l'une des revendications précédentes, **caractérisé en ce que** le mécanisme (14) de réglage est agencé pour exécuter en même temps au moins d'un manière prépondérante le mouvement de levage et le mouvement de pivotement.

6. Appareil porté suivant l'une des revendications 4 ou 5, **caractérisé en ce que** le bras (15) porteur est assemblé à l'élément (11) d'attache par un élément (18) de ressort agissant suivant l'axe (S) de réglage.

7. Appareil porté suivant l'une des revendications 4 à 6, **caractérisé en ce que** le mécanisme (14) de réglage a un guidage (19) en rotation, par lequel le déplacement du bras (15) porteur le long de l'axe (S) de réglage est couplé à force à la rotation autour de l'axe (S) de réglage.

8. Appareil porté suivant la revendication 7, **caractérisé en ce que** le guidage (19) en rotation a une coulisse (20) de guidage montée fixe sur l'élément (11) d'attache ainsi qu'un élément (21) de guidage, qui est guidé à coulissement dans la coulisse (20) de guidage et qui est solidaire en rotation du bras (15) porteur ainsi que fixe en coulissement par rapport à l'axe (S) de réglage.

9. Appareil porté suivant l'une des revendications 7 ou 8, **caractérisé en ce que** le guidage (19) en rotation a une section transversale (20.2) de guidage axiale, par laquelle le bras (15) porteur est, au voisinage de la position de transport, guidé en étant solidaire en rotation par rapport à l'axe (S) de réglage.

10. Appareil porté suivant l'une des revendications 4 à 9, **caractérisé en ce que** l'élément (12) de suspension est assemblé indirectement à l'élément (11) d'attache par un deuxième axe (B) de pivotement indépendamment du bras (15) porteur sur un côté opposé suivant l'horizontal au premier axe (A) de pivotement par rapport à l'axe (R) de la au moins une roue (13) de roulement.

11. Appareil porté suivant la revendication 10, **caractérisé en ce que** le mécanisme (14) de déplacement a un actionneur (17) linéaire relié au moins indirectement à l'élément (11) d'attache ainsi que par le deuxième axe (B) de pivotement à l'élément (12) de suspension, lequel actionneur (17) est agencé pour provoquer le passage entre la position de travail et la position de transport.

12. Appareil porté suivant la revendication 11, **caractérisé en ce que** l'actionneur (17) linéaire est solidaire, en rotation par rapport à l'axe (S) de réglage, de l'élément (11) d'attache et peut pivoter à la fois par rapport à l'élément (11) d'attache et également par rapport à l'élément (12) de suspension au moins suivant deux axes.

13. Appareil porté suivant l'une des revendications 11 à 12, **caractérisé en ce que** l'actionneur (17) linéaire est assemblé à l'élément (11) d'attache par au moins une articulation (22) à deux axes et assemblé à pivotement, autour d'un troisième axe (C) de pivotement s'étendant en faisant un angle avec le deuxième axe (B) de pivotement, à une partie (16) de liaison, qui est assemblée à pivotement avec l'élément (12) de suspension autour du deuxième axe (B) de pivotement.

14. Appareil porté suivant l'une des revendications 4 à 13, **caractérisé en ce que** l'élément (12) de suspension et le bras (15) porteur ont des parties (12.1, 15.2) de butée coopérant entre elles, par lesquelles un pivotement vers le haut de l'élément (12) de suspension autour du premier axe (A) de pivotement peut être limité.
